# EUROPEAN PATENT SPECIFICATION

(11) **EP 0 787 631 B1**
(45) Date of publication and mention of the grant of the patent: **02.05.2002**
(21) Application number: 96300658.0
(22) Date of filing: 30.01.1996
(51) Int. Cl.: B60R 21/32

(54) **Matched filter for vehicle crash discrimination**
Angepasster Filter für Kraftfahrzeug-Aufprallunterscheidung
Filtre apparié pour détection d'accident de véhicule

(43) Date of publication of application: 06.08.1997
(73) Proprietor: AUTOMOTIVE SYSTEMS LABORATORY INC., Farmington Hills Michigan 48331 (US)
(72) Inventor: Gioutsos, Tony, Brighton, Michigan 48116 (US)
(74) Representative: Price, Nigel John King

(56) References cited:
- EP-A- 0 402 027
- EP-A- 0 528 514
- EP-A- 0 536 996
- EP-A- 0 536 997
- EP-A- 0 568 017
- EP-A- 0 665 140
- EP-A- 0 695 668
- WO-A-90/09298
- WO-A-94/14638
- WO-A-95/04673
- WO-A-96/06757
- US-A- 5 363 302

## Description

The present invention relates to a filter for processing data representative of vehicle acceleration to produce a discrimination output value suitable for determining whether to deploy an occupant safety restraint device, such as an air bag.

Generally, a variety of systems and methods are utilized for sensing a vehicle crash or sudden vehicle deceleration and deploying a vehicle safety device such as an air bag, or locking a seat belt, or actuating a pretensioner for a seat belt retractor. Typically, the safety device is triggered or otherwise deployed into its protective position when the system detects an impact or deceleration exceeding a threshold value therefor. These known systems and methods are generally designed around a predetermined crash discrimination strategy which looks to various designated physical measures, such as vehicle velocity, or change in velocity (jerk value), to provide crash detection.

However, to be effective, most crash discrimination strategies and their attendant threshold values tend to be narrowly tailored to specific vehicle makes and models, and/or specific types of vehicle crashes. Therefore, because known crash discrimination systems implement desired crash discrimination strategies using specific hardware and/or firmware designed to provide the necessary narrow tailoring, these systems are extremely difficult if not impossible to redesign or reconfigure for use with different crash strategies or vehicle types. The rigidity built into the system designs simply does not facilitate easy and cost effective modification, updating, and/or reconfiguration of the system.

EP-A-0568017 discloses a method for predicting impact by using neural networks comprising steps of supplying a predetermined crash curve to a first neural network having an intermediate layer to train said first neural network by means of learning calculation and supplying a predetermined air bag deployment limit curve to a second neural network to train said second neural network and supplying data indicative of crash curve obtained by an acceleration sensing device on collision to said first and second neural networks.

WO 95/04673 discloses a vehicle crash discrimination method and system for controlling the actuation of a vehicle passenger restraint device (e.g., an air bag or a seat belt harness) comprising determining a vehicle velocity value and comparing it to a predetermined velocity threshold value wherein, if the predetermined velocity threshold value is exceeded, the slope of vehicle acceleration with respect to time (i.e. jerk value) is determined and compared to a predetermined slope threshold value.

It is an object of the present invention to provide a matched filter arranged to optimise the reconfigurability and flexibility in designing a vehicle crash discrimination system.

The filter according to the invention is defined in claim 1. Claims 2 and 3 define particular embodiments.

In this way, there may be provided a matched filter which applies predetermined scaling factors to vehicle acceleration data to effect a crash discrimination analysis or strategy.

Also, the design flexibility in a vehicle crash discrimination system may be optimized by providing a matched filter so that the crash discrimination system can be easily reconfigured by changing a set of scaling factors stored in the matched filter.

In a first filter arrangement, the respective values of the at least one set of n scaling factors are selected to exponentially reduce the oldest acceleration data samples to provide a discrimination output value representative of vehicle velocity incorporated with a damped memory of past vehicle acceleration. In a second filter arrangement, two sets of n scaling factors are used to provide discrimination of long-period, low-velocity crashes. A first set of scaling factors are selected to provide a discrimination output value representative of vehicle velocity, and a second set of scaling factors are selected to provide a discrimination output value representative of a jerk value.

The present invention will be more fully understood upon reading the following detailed description of the preferred embodiment in conjunction with the accompanying drawings in which:
Fig. 1 is a block circuit diagram illustrating a vehicle crash discrimination system in accordance with the present invention;
Fig. 2 is a block circuit diagram of a matched filter in accordance with the present invention;
Fig. 3 is a graph illustrating a set of scaling factors for a first filter arrangement; and
Fig. 4 is a graph illustrating a set of scaling factors for a second filter arrangement.

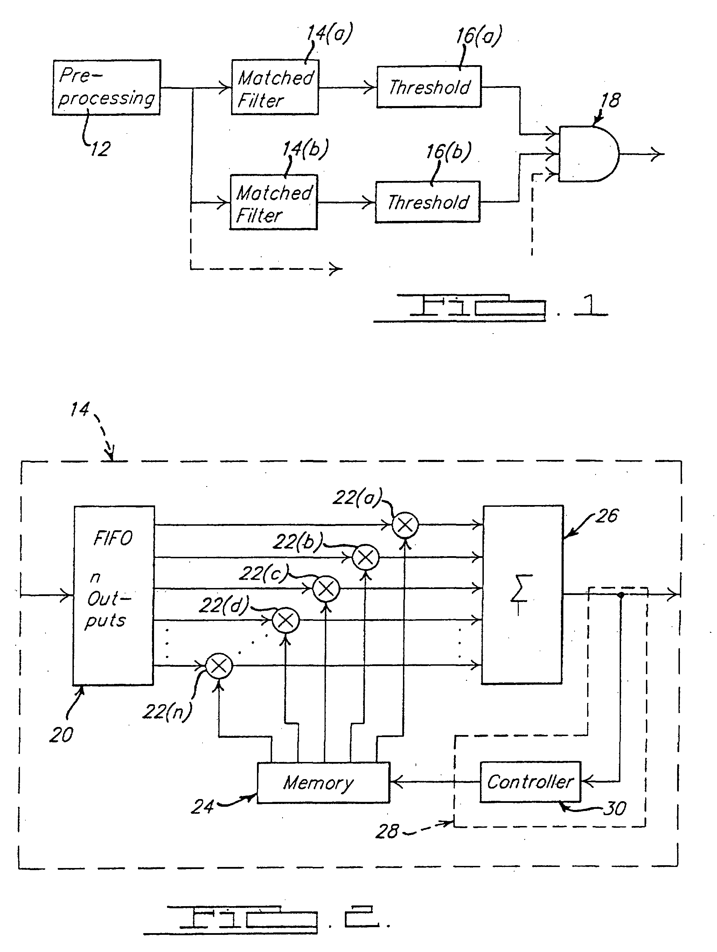

As shown in Fig. 1, a crash discrimination system 10 in accordance with the present invention receives raw vehicle acceleration data from at lest one accelerometer at an input data pre-processing stage 12. The pre-processing stage 12 can include signal processing circuitry such as an A/D convertor, filter, natural log calculating means and autocorrelator, as described in U.S. Patent 5,282,134 and incorporated by reference herein. The output generated by the pre-processing stage 12 is then applied to crash discrimination match filter stages 14(a) and 14(b) for processing into output data suitable for comparison with at least one predetermined threshold value in a corresponding decisional stage 16(a) and 16(b). Responsive to the threshold comparison, the decisional discrimination process includes an AND gate 18 for controlling actuation of a vehicle occupant safety restraint device, such as an air bag.

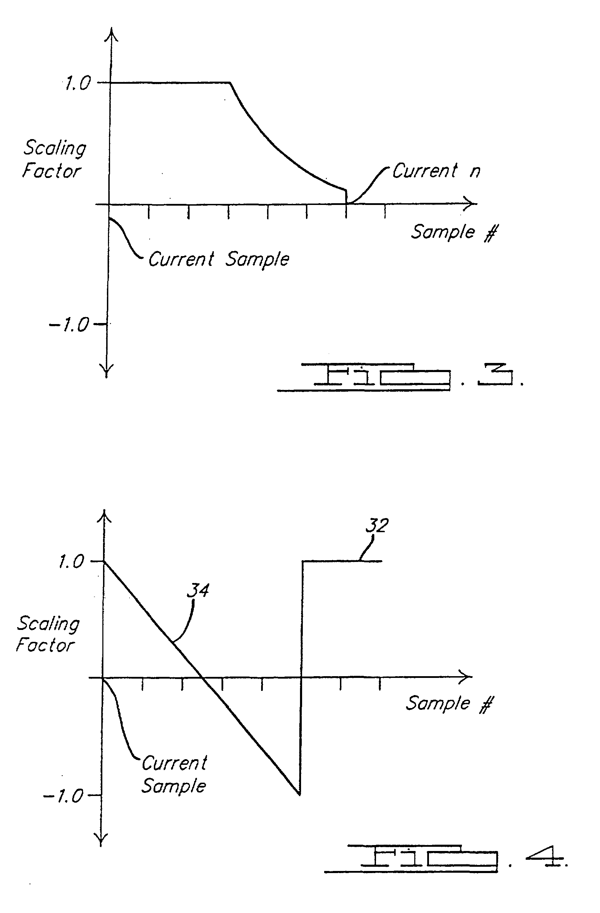

The present invention achieves optimal design flexibility by performing the appropriate vehicle crash discrimination analysis with the matched filter 14 to effect the desired crash discrimination strategy. As shown in Fig. 2, the match filter 14 includes a FIFO register having sequentially ordered output slots each input into a corresponding multiplying junction 22 (a)-(n). A memory device 24, such as a ROM, applies a predetermined set of n scaling factors to the multiplying junctions 22 (a)-(n) to effect the crash discrimination processing on the received vehicle acceleration data samples. The n scaled acceleration data samples are then summed in a summer unit 26 for output to the corresponding threshold comparison stage 16. The scaled data samples could alternatively be accumulated in an accumulator.

In accordance with the present invention, each set of n scaling factors are calculated to provide an overall crash discrimination processing analysis to the received acceleration data samples. For example, Fig. 3 illustrates a first set of n scaling factors which allows the matched filter to determine vehicle velocity while damping older acceleration samples. More specifically, 100% of the values of the most current n number of data samples are used to calculate the velocity, while the values of the older n number of data samples are made exponentially smaller. Thus, the newer samples are provided with a scaling factor of 1.0, and the older samples are provided with exponentionally smaller scaling factors. This arrangement provides a velocity calculation with a built in "memory" of past events.

Fig. 4 illustrates a second arrangement of n scaling factors which provides crash discrimination for long-period, low-velocity type crashes. As described in co-pending application Serial No. 07/874,431 entitled "Method for Discriminating Long-Period, Low-Velocity Crashes," filed April 27, 1992, incorporated by reference herein, the wide gray area between "fire" and "no fire" crash situations provides difficulty in accurately discriminating slowly developing type vehicle crashes. The method described in Serial No. 07/874,431, provides accurate discrimination for these type of crashes by comparing the vehicle velocity data to a threshold value which is approximately equal to half the velocity of a maximum-allowable low-velocity crash without actuating a vehicle safety device, such as an air bag. If the velocity threshold is exceeded, the slope of the velocity, i.e. jerk value, is calculated and compared to a slope threshold value. If the slope threshold is exceeded, the safety device is actuated or fired.

As shown in Fig. 4, the present invention achieves this type of crash strategy arrangement in a matched filter by using two separate sets of scaling factors which are selectively applied under control of a feedback loop 28 and controller 30. More specifically, the first set of scaling factors (designated as 32) comprise a set of ones (1.0) applied to the acceleration samples to determine the velocity. Alternatively, a damped arrangement such as shown in Fig. 3 could be employed. Once the feedback 28/controller 30 determines that the velocity threshold equal to half the velocity of a maximum-allowable low-velocity crash has been exceeded, the second set of scaling factors (designated as 34) ranging from -1.0 to 1.0 are applied to the acceleration data samples to effect calculation of the slope at the accumulator.

Thus, by utilizing one or more match filters to implement a predetermined crash discrimination analysis, the present invention advantageously provides system design flexibility. Different crash discrimination processes or strategies can be implemented simply by changing the scaling factors stored in the memory 24. Further, while the invention has been shown as utilizing at least two matched filters, one of ordinary skill in the art will appreciate that any number of different matched filters can be employed in a single crash discrimination system.

It will be understood that the foregoing description of the preferred embodiment of the present invention is for illustrative purposes only, and that the various structural and operational features herein disclosed are susceptible to a number of modifications, none of which departs from the scope of the present invention as defined in the appended claims.

## Claims

1. A filter (14) for processing data representative of vehicle acceleration to produce a discrimination output value suitable for determining whether to deploy an occupant safety restraint device, said filter comprising:
an input means (20) for organizing the input data representative of vehicle acceleration into n time sequential data samples ranging from a current sample to an nth oldest sample;
a memory means (24) for storing at least one set of n predetermined scaling factors;
means (22) for applying to each of the n data samples a respective predefined one of the n predetermined scaling factors of said at least one set so as to produce n respective scaled data samples; and
means (26) for combining the n scaled data samples to produce the discrimination output value; wherein
the filter comprises means (28, 30) for selectively applying at least one of a plurality of sets of n predetermined scaling factors from the memory means (24), the values of a respective set of said n predetermined scaling factors being chosen to effect a respective vehicle crash discrimination strategy.

2. The filter of claim 1 wherein the respective values of said at least one set of n scaling factors are selected to exponentially reduce the oldest acceleration data samples to provide a discrimination output value representative of vehicle velocity incorporated with a damped memory of past vehicle acceleration.

3. The filter of claim 1 wherein said at least one set of n scaling factors comprises a first and second set of n scaling factors, said first set of scaling factors selected to provide a discrimination output value representative of vehicle velocity, and said second set selected to provide a discrimination output value representative of a jerk value.

## Patentansprüche

1. Filter (14) zur Verarbeitung von für eine Fahrzeugbeschleunigung charakteristischen Daten zur Erzeugung einer Unterscheidungsausgabegröße, die dazu geeignet ist festzulegen, ob eine Insassen-Sicherheitsrückhalteeinrichtung ausgelöst wird, wobei der Filter umfasst:
eine Eingabeeinrichtung (20) zum Ordnen der für die Fahrzeugbeschleunigung charakteristischen Eingabedaten in n zeitlich aufeinanderfolgende Datenwerte, die von einem aktuellen Wert bis zu einem n-ten ältesten Wert reichen;
eine Speichereinrichtung (24) zum Speichern mindestens eines Satzes von n vorbestimmten Skalierungsfaktoren;
Mittel (22) zum Anwenden eines jeweiligen vordefinierten der n vorbestimmten Skalierungsfaktoren des mindestens einen Satzes auf jeden der n Datenwerte zur Erzeugung n jeweiliger skalierter Datenwerte; und
Mittel (26) zum Kombinieren der n skalierten Datenwerte zur Erzeugung der Unterscheidungsausgabegröße, wobei
der Filter Mittel (28, 30) zum selektiven Anwenden zumindest eines Satzes aus einer Mehrzahl von Sätzen von n vorbestimmten Skalierungsfaktoren von der Speichereinrichtung (24) umfasst, wobei die Werte eines jeweiligen Satzes der n vorbestimmten Skalierungsfaktoren ausgewählt werden, um eine jeweilige Fahrzeugaufprall-Unterscheidungsstrategie zu bewirken.

2. Filter nach Anspruch 1, wobei die jeweiligen Werte des zumindest einen Satzes von n Skalierungsfaktoren ausgewählt werden, um zur Bereitstellung einer für eine Fahrzeuggeschwindigkeit charakteristischen Unterscheidungsausgabegröße, die mit einem gedämpften Speicherwert einer früheren Fahrzeugbeschleunigung verbunden ist, die ältesten Beschleunigungsdatenwerte expotentiell zu verringern.

3. Filter nach Anspruch 1, wobei mindestens ein Satz von n Skalierungsfaktoren einen ersten und einen zweiten Satz von n Skalierungsfaktoren umfasst, wobei der erste Satz von Skalierungsfaktoren zur Bereitstellung einer für die Fahrzeuggeschwindigkeit charakteristischen Unterscheidungsausgabegröße ausgewählt wird, und wobei der zweite Satz zur Bereitstellung einer für einen Stoßwert charakteristischen Unterscheidungsausgabegröße ausgewählt wird.

## Revendications

1. Filtre (14) pour traiter des données représentant l'accélération d'un véhicule afin de produire une valeur de sortie de distinction adaptée pour déterminer s'il y a lieu de déployer un dispositif de sécurité pour occupant, ledit filtre comprenant :
un moyen d'entrée (20) pour organiser les données d'entrée représentant l'accélération du véhicule en n échantillons de données séquentiels dans le temps, allant d'un échantillon courant à un échantillon le plus ancien, qui est le n échantillon,
un moyen formant mémoire (24) pour mémoriser au moins un ensemble de n facteurs d'étalonnage déterminés au préalable,
un moyen (22) pour appliquer à chacun des n échantillons de données un facteur respectif prédéfini parmi les n facteurs d'étalonnage déterminés au préalable dudit au moins un ensemble afin de produire n échantillons de données étalonnés respectifs, et
un moyen (26) pour combiner les n échantillons de données étalonnés afin de produire la valeur de sortie de distinction,
le filtre comprenant des moyens (28, 30) pour appliquer sélectivement au moins un ensemble parmi une pluralité d'ensembles de n facteurs d'étalonnage déterminés au préalable provenant du moyen formant mémoire (24), les valeurs d'un ensemble respectif desdits n facteurs d'étalonnage déterminés au préalable étant choisies de façon à effectuer une stratégie respective de distinction de collisions de véhicule.

2. Filtre selon la revendication 1, dans lequel les valeurs respectives dudit au moins un ensemble de n facteurs d'étalonnage sont choisies de façon à réduire de manière exponentielle les échantillons de données d'accélération les plus anciens pour fournir une valeur de sortie de distinction représentant la vitesse du véhicule incorporée avec une mémoire amortie de l'accélération passée du véhicule.

3. Filtre selon la revendication 1, dans lequel ledit au moins un ensemble de n facteurs d'étalonnage comprend un premier et un second ensemble de n facteurs d'étalonnage, ledit premier ensemble de facteurs d'étalonnage étant choisi de façon à fournir une valeur de sortie de distinction représentant la vitesse du véhicule, et ledit second ensemble étant choisi de façon à fournir une valeur de sortie de distinction représentant une valeur de saccade.
